# EUROPÄISCHE PATENTSCHRIFT

(11) **EP 4 148 193 B1**
(45) Veröffentlichungstag und Bekanntmachung des Hinweises auf die Patenterteilung: **17.04.2024**
(21) Anmeldenummer: 22193710.5
(22) Anmeldetag: 02.09.2022
(51) Int. Cl.: E02F 9/26, G01G 19/08

(54) **VERFAHREN ZUM AUFRUFEN EINER WIEGEFUNKTION EINER ARBEITSMASCHINE UND ARBEITSMASCHINE**
METHOD FOR INVOKING A WEIGHING FUNCTION OF A WORKING MACHINE AND WORKING MACHINE
PROCÉDÉ D'APPEL D'UNE FONCTION DE PESÉE D'UNE MACHINE DE TRAVAIL ET MACHINE DE TRAVAIL

(30) Priorität: 14.09.2021 DE 102021210155
(43) Veröffentlichungstag der Anmeldung: 15.03.2023
(73) Patentinhaber: Robert Bosch GmbH, 70442 Stuttgart (DE)
(72) Erfinder: Schepers, Claus, 89182 Bernstadt (DE); Eret, Egor, 89077 Ulm (DE)

(56) Entgegenhaltungen:
- EP-A1- 3 165 885
- JP-A- 2021 088 815

## Beschreibung

Die vorliegende Erfindung betrifft ein Verfahren zum Aufrufen einer Wiegefunktion einer Arbeitsmaschine, eine Recheneinheit und ein Computerprogramm zu dessen Ausführung, sowie eine Arbeitsmaschine.

### Hintergrund der Erfindung

Bestimmte Arbeitsmaschinen, z.B. Baumaschinen wie Bagger oder Radlader, weisen einen bewegbaren Ausleger bzw. Arbeitsarm mit mehreren Auslegerelementen auf, an dessen Ende mittels eines der Auslegerelemente, z.B. einer Schaufel oder Gabel, Lasten aufgenommen werden können, um diese zu bewegen. Die Auslegerelemente sind mittels Aktuatoren, insbesondere Hydraulikzylindern bewegbar. Solche Arbeitsmaschinen können eine Wiegefunktion aufweisen, die mittels Sensoren an den Aktuatoren wirkende Kräfte und/oder Drehmomente bestimmt, um das Ladegewicht zu bestimmen.

Patentdokument EP 3 165 885 A1 offenbart die Merkmale des Oberbegriffs von Anspruch 1.

### Offenbarung der Erfindung

Erfindungsgemäß werden ein Verfahren zum Aufrufen einer Wiegefunktion einer Arbeitsmaschine, eine Recheneinheit und ein Computerprogramm zu dessen Ausführung, sowie eine Arbeitsmaschine mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme zu prüfen, ob ein Aktuator stillsteht, und, wenn dies der Fall ist, eine kleine Bewegung dieses Aktuators zu veranlassen und die Gewichtsbestimmung durch die Wiegefunktion während der kleinen Bewegung auszulösen bzw. durchzuführen. Dadurch kann erreicht werden, dass die Gewichtsbestimmung erfolgt, während ein Gleitreibungszustand in den Aktuatoren vorliegt und entsprechende Gleitreibungskräfte herrschen. Die Genauigkeit der Wiegefunktion kann somit erhöht werden, da die Gleitreibungskräfte von der Wiegefunktion berücksichtigt werden können. Zustände der Aktuatoren, in den andere Kräfte wirken, die von der Wiegefunktion nicht richtig berücksichtigt werden können und somit die Gewichtbestimmung verfälschen, werden ausgeschlossen. Solche ausgeschlossenen Zustände sind insbesondere Haftreibungszustände und Zustände, in denen sich ein Aktuator in einer Endlage befindet.

Im Einzelnen umfasst das Verfahren die folgenden von einer Steuerung(seinheit) oder einer Wiegefunktion-Steuerung(seinheit) der Arbeitsmaschine durchgeführten Schritte:
Prüfen, ob wenigstens ein Aktuator des einen oder der mehreren Aktuatoren stillsteht; wenn wenigstens ein Aktuator stillsteht, Starten einer Minimalbewegung des wenigstens einen Aktuators, der stillsteht, wobei der wenigstens eine Aktuator (automatisch) angesteuert wird, um diesen in die Minimalbewegung zu versetzen, wobei die Minimalbewegung so gesteuert wird, dass eine Geschwindigkeit der Minimalbewegung kleiner als eine vorbestimmte Maximalgeschwindigkeit ist; Aufrufen der Wiegefunktion, so dass wenigstens ein Wiegezeitpunkt innerhalb eines Zeitabschnitts liegt, in dem der wenigstens eine Aktuator entsprechend der Minimalbewegung bewegt wird; und Beenden der Minimalbewegung.

Die Arbeitsmaschine weist zur Aufnahme von Lasten einen Ausleger (bzw. einen Arbeitsarm) mit einem oder mehreren Auslegerelementen auf, die durch einen oder mehrere unabhängig voneinander wirkende Aktuatoren (bevorzugt Hydraulikzylinder) bewegbar sind. Falls ein Auslegerelement durch mehrere parallel wirkende Aktuatoren (z.B. Hydraulikzylinder) bewegt wird, sind diese nicht unabhängig voneinander wirkend und werden im Sinne dieser Anmeldung als einzelner Aktuator (der unabhängig von anderen Aktuator wirkt) angesehen. Bevorzugt sind mehrere unabhängig voneinander wirkende Aktuatoren vorgesehen.

Es sind Sensoren (an der Arbeitsmaschine, insbesondere an deren Ausleger) vorgesehen, die dazu eingerichtet sind, Zustandsdaten des Auslegers bzw. der Auslegerelemente zu erfassen. Die Wiegefunktion ist dazu eingerichtet, erfasste Zustandsdaten auszuwerten, um ein Gewicht einer von dem Ausleger aufgenommenen Last zu bestimmen. Die Wiegefunktion wertet insbesondere Zustandsdaten, die an einem Wiegezeitpunkt oder in einem Wiegezeitraum erfasst wurden, aus. Zustandsdaten können insbesondere Kräftedaten und Positionsdaten sein, wobei die Kräftedaten eine oder mehrere von den Aktuatoren aufgebrachte Kräfte anzeigen und die Positionsdaten eine oder mehrere Positionen des einen oder der mehreren Auslegerelemente anzeigen. Zustandsdaten können auch Druckdaten, Momentdaten, Drehmomentdaten, Geschwindigkeitsdaten, Beschleunigungsdaten und/oder Spannungsdaten, oder ähnliches sein, die mittels entsprechender Sensoren erfasst werden. Insbesondere können Druckdaten, Momentdaten, Drehmomentdaten, Geschwindigkeitsdaten, Beschleunigungsdaten und/oder Spannungsdaten als Kräftedaten und/oder Positionsdaten bzw. als Daten, die diese charakterisieren, angesehen werden, da sich aus diesen Kräfte (z.B. mittels Drücken) und/oder Positionen (z.B. mittels der Beschleunigung oder Geschwindigkeit) bestimmen lassen bzw. charakterisieren lassen.

Dass sich ein Aktuator bewegt oder stillsteht bzw. nicht bewegt, bezieht sich insbesondere auf die relative Bewegung von Elementen, deren relative Bewegung durch den Aktuator bewirkt wird. Entsprechende, mit diesen Elementen verbundene Teile des Aktuators und Antriebsteile des Aktuators werden also ebenso (bezogen auf den Aktuator) nicht bewegt, so dass von einer Bewegung oder einem Stillstand des Aktuators gesprochen werden kann.

Das Verfahren wird automatisch ausgeführt, etwa durch die Steuerung oder Wiegefunktion-Steuerung der Arbeitsmaschine. Ein Steuern durch einen Bediener der Arbeitsmaschine ist nicht notwendig. Ein Bediensignal, das einer Eingabe des Bedieners, etwa mittels eines Joysticks, entspricht, wird übersteuert bzw. überlagert. Der Bediener kann, wenn er z.B. das Gewicht der aufgenommenen Last wissen will, die Durchführung des erfindungsgemäßen Verfahrens zum Aufrufen der Wiegefunktion veranlassen, z.B. durch Betätigen eines entsprechenden Funktionsschalters. Die Durchführung des erfindungsgemäßen Verfahrens zum Aufrufen der Wiegefunktion kann aber auch durch eine Anwendung (Computerprogramm), die in der Steuerung ausgeführt wird, veranlasst werden, etwa durch Senden einer Wiegeanfrage.

Das Maß der Geschwindigkeit ist abhängig vom Aktuator. Bei einem Hydraulikzylinder könnte dies z.B. einige Millimeter je Sekunde sein. Als Maß der Geschwindigkeit kann ebenso die Änderungsgeschwindigkeit von Positionsdaten verwendet werden, z.B. eine Winkeländerungsgeschwindigkeit eines Schwenkwinkels, der durch den Aktuator geändert wird. Die Maximalgeschwindigkeit wird bevorzugt so vorbestimmt, dass die daraus resultierende Bewegung nur sehr gering (ermittelbar anhand der Positionsdaten) und insbesondere für menschliche Bediener der Arbeitsmaschine nicht oder kaum bemerkbar ist. Etwa sollte die gesamte vom Aktuator während der Minimalbewegung zurückgelegte Strecke kleiner als ein Bruchteil einer maximal möglichen Bewegungsstrecke des Aktuators sein, z.B. kleiner als 10 %, oder kleiner als 5 %, vorzugsweise kleiner als 1 %. Das Produkt von Minimalgeschwindigkeit und zeitlicher Länge des Zeitabschnitts sollte vorzugsweise kleiner als dieser Bruchteil sein. Die zeitliche Länge des Zeitabschnitts ist nach unten durch die Zeitdauer begrenzt, die die Wiegefunktion zum Erfassen der Kräfte und Positionsdaten benötigt.

Der Begriff "Auslegerelemente" soll sowohl Tragarme, Hubarme und ähnliches umfassen als auch Arbeitsausrüstungen bzw. -werkzeuge, die der Aufnahme von Lasten dienen, z.B. Schaufeln, Gabeln oder Greifer.

Bevorzugt ist die Geschwindigkeit der Minimalbewegung größer als eine vorbestimmte Minimalgeschwindigkeit. Bei geeigneter Wahl der Minimalgeschwindigkeit können so Zustände vermieden werden, in denen ein Übergangszustand von Haft- und Gleitreibung, mit nicht genau bekannten Reibungskräften, vorliegt. Demnach wird die Minimalgeschwindigkeit vorzugsweise so gewählt, dass ein (reiner) Gleitreibungszustand des Aktuators vorliegt. Auch kann durch die Minimal- und die Maximalgeschwindigkeit ein Geschwindigkeitsfenster, für das die wirkende Reibungskraft bekannt ist, gebildet werden. Insgesamt kann so die Genauigkeit der Wiegefunktion weiter erhöht werden. Ob tatsächlich ein Gleitreibungszustand vorliegt, kann beispielsweise dem Fachmann anhand von Erfahrungswerten bekannt sein oder vom Fachmann mittels Versuchen, bei denen einige geringe Geschwindigkeiten getestet werden, einfach ermittelt werden.

Bevorzugt umfasst der Zeitabschnitt, in dem der wenigstens eine Aktuator entsprechend der Minimalbewegung bewegt wird, einen ersten und einen zweiten Teilabschnitt, wobei der Aktuator im zweiten Teilabschnitt in eine Richtung bewegt wird, die der Richtung, in die der Aktuator im ersten Teilabschnitt bewegt wird, entgegengesetzt ist; wobei der wenigstens eine Wiegezeitpunkt der Wiegefunktion innerhalb des ersten und/oder innerhalb des zweiten Teilabschnitts liegt. Auf diese Weise kann der Aktuator und somit das bewegte Auslegerelement in seine ursprüngliche Position zurückgebracht werden, so dass sich aus Sicht des Bedieners der Arbeitsmaschine keine Veränderung ergibt.

Bevorzugt werden Positionsdaten erfasst und das Prüfen, ob wenigstens ein Aktuator stillsteht, erfolgt basierend auf den Positionsdaten, und/oder das Prüfen, ob wenigstens ein Aktuator stillsteht, erfolgt basierend auf einem Bediensignal. Das Bediensignal kann z.B. eine Auslenkung eines Joysticks sein, mit dem der Bediener der Arbeitsmaschine die Bewegung der Aktuatoren steuern kann. Ein Stillstand eines Aktuators würde dann festgestellt, wenn der Joystick in die Richtung, die diesem Aktuator entspricht, nicht ausgelenkt ist oder nur innerhalb bestimmter Grenzen ausgelenkt ist.

Bevorzugt umfassen die Sensoren einen oder mehrere Drucksensoren, um die Kräftedaten zu erfassen, und einen oder mehrere Positionssensoren, insbesondere einen oder mehrere Winkelsensoren, um die Positionsdaten zu erfassen. Ein weiteres Beispiel für mögliche Positionssensoren sind GPS-Sensoren (GPS: Global Positioning System). Diese Sensoren erlauben eine direkte Aussage über die vorliegenden Kräfte bzw. die augenblickliche Geometrie des Auslegers und die Bewegung der Auslegerelemente.

Bevorzugt erfolgt das Beenden der Minimalbewegung in Reaktion auf eine Meldung der Wiegefunktion oder in Reaktion auf ein Vorliegen eines Wiegeergebnisses der Wiegefunktion. Auf diese Weise kann der Zeitabschnitt möglichst kurz gehalten werden.

Bevorzugt umfasst das Verfahren ein Empfangen einer Wiegeanfrage; und in Reaktion auf die Wiegeanfrage ein Durchführen des Prüfens, ob wenigstens ein Aktuator stillsteht, und, wenn wenigstens ein Aktuator stillsteht, der weiteren Schritte. Die Wiegefunktion kann somit auf eine Anforderung, z.B. einer Anwendung, die in der Steuerung der Arbeitsmaschine ausgeführt wird, aufgerufen werden.

Eine erfindungsgemäße Recheneinheit, etwa ein Steuergerät (z.B. Steuerung oder Wiegefunktion-Steuerung) einer Arbeitsmaschine, ist, insbesondere programmtechnisch, dazu eingerichtet, ein erfindungsgemäßes Verfahren durchzuführen.

Eine erfindungsgemäße Arbeitsmaschine weist zur Aufnahme von Lasten einen Ausleger mit einem oder mehreren Auslegerelementen auf, die durch einen oder mehrere unabhängig voneinander wirkende Aktuatoren bewegbar sind, wobei Sensoren vorgesehen sind, die eingerichtet sind, Zustandsdaten des Auslegers zu erfassen, wobei eine Wiegefunktion-Steuerung vorgesehen ist, die eine Wiegefunktion implementiert, die dazu eingerichtet ist, erfasste Zustandsdaten auszuwerten, um ein Gewicht einer von dem Ausleger aufgenommenen Last zu bestimmen; aufweisend eine erfindungsgemäße Recheneinheit. Bei der Recheneinheit kann es sich insbesondere um die Wiegefunktion-Steuerung handeln. Bevorzugt ist die Wiegefunktion-Steuerung und/oder die Recheneinheit dazu eingerichtet, ein Übersteuerungssignal, insbesondere ein PWM-Signal, zu erzeugen, mit dem ein Bediensignal eines Bedieners übersteuert wird. Bevorzugt ist eine Übersteuerungseinrichtung, insbesondere mit einem Druckreduzierungsventil und einem Wechselventil, vorgesehen, die mit einem Betätigungselement eines Aktuators verbunden ist, um das Bediensignal zu übersteuern; wobei die Wiegefunktion-Steuerung und/oder die Recheneinheit mit der Übersteuerungseinrichtung verbunden sind, um diese mittels des Übersteuerungssignals anzusteuern. Diese Ausgestaltung ist zweckmäßig, da so vorhandene Arbeitsmaschinen, insbesondere solche ohne (elektronisches) Steuergerät zu Ansteuerung der Aktuatoren, mit der erfindungsgemäßen Funktionalität ergänzt werden können (es z.B. also eine Wiegefunktion-Steuerung und eine Übersteuerungseinrichtung entsprechend der Erfindung eingebaut werden).

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist in den Ansprüchen definiert.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt einen Radlader als Beispiel für eine Arbeitsmaschine.
Figur 2 zeigt beispielhafte Sensoren zur Erfassung von Kräfte- und Positionsdaten und ein beispielhaftes elektro-hydraulisches System zur Ansteuerung von Aktuatoren.
Figur 3 zeigt beispielhafte Sensoren zur Erfassung von Kräfte- und Positionsdaten und ein beispielhaftes hydraulisches System zur Ansteuerung von Aktuatoren.
Figur 4 zeigt ein Ablaufdiagramm gemäß einer bevorzugten Ausführungsform der Erfindung. Detaillierte Beschreibung der Zeichnung

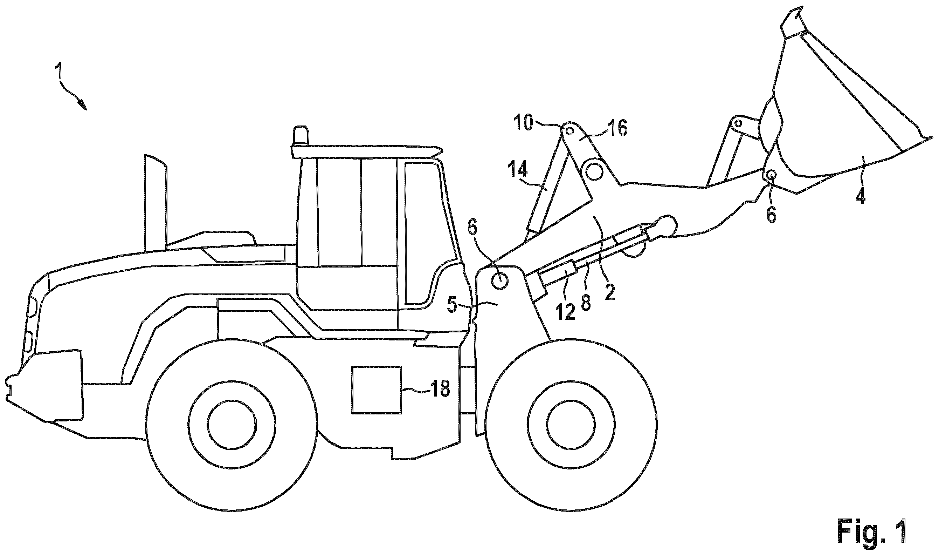

Figur 1 zeigt einen Radlader 1 als Beispiel für eine Arbeitsmaschine. Der Radlader 1 weist einen Ausleger auf, der wiederum mehrere Auslegerelemente aufweist, um Lasten aufzunehmen. Die Auslegerelemente sind hier beispielhaft ein Hubarm 2 und eine Schaufel 4, die miteinander bzw. mit einem Auslegerträger 5 (z.B. Fahrgestell) des Radladers 1 mittels Achsen 6 drehbar bzw. schwenkbar verbunden sind. Die Auslegerelemente 2, 4 sind mittels Aktuatoren 8, 10 bewegbar, d.h. die Dreh- bzw. Schwenkbewegung um die Achsen wird durch eine Bewegung der Aktuatoren bewirkt.

Es ist ein erster Aktuator 8 für den Hubarm 2 vorgesehen, der die Bewegung bzw. Drehung des Hubarms 2 relativ zum Auslegerträger 5 bewirkt. Ebenso ist ein zweiter Aktuator 10 für die Schaufel 4 vorgesehen, der die Schaufel 4 bewegt bzw. dreht (kippt). Die Aktuatoren umfassen insbesondere Hydraulikzylinder 12, 14, d.h. einen ersten Hydraulikzylinder 12 des ersten Aktuators 8 und einen zweiten Hydraulikzylinder 14 des zweiten Aktuators 10. Die Bewegung der Schaufel 4 wird über ein Gestänge 16 übertragen bzw. angelenkt (hier beispielhaft mit sogenannter Z-Kinematik), das als Komponente des Aktuators 10 der Schaufel 4 angesehen werden kann.

Die Aktuatoren 8, 10 können durch eine Steuerung 18 angesteuert werden, wobei im Falle von Hydraulikzylindern 12, 14 Wegeventile vorgesehen sind, die den Fluss von Hydraulikflüssigkeit zu den Hydraulikzylindern steuern.

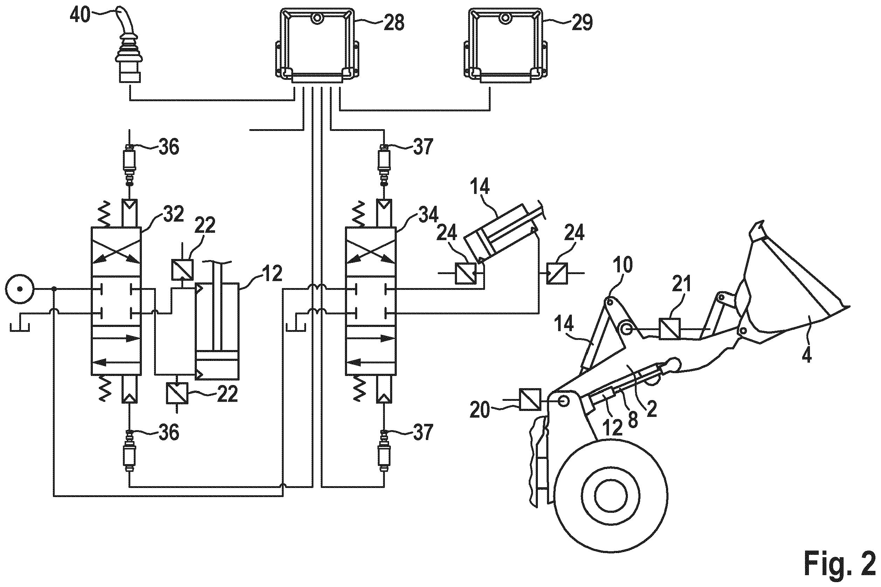

Es sind Sensoren vorgesehen (in Figur 1 nicht dargestellt, siehe jedoch Figur 2), die Kräftedaten und Positionsdaten erfassen. Kräftedaten sind Daten bzw. Messdaten, die die von den Aktuatoren aufgebrachte Kräfte charakterisieren bzw. anzeigen. Dazu können insbesondere Drucksensoren verwendet werden, z.B. an den Hydraulikzylindern der Druck auf beiden Seiten des Kolbens gemessen werden, wobei dann die vom Hydraulikzylinder aufgebrachte Kraft durch die Druckdifferenz charakterisiert ist. Positionsdaten sind Daten bzw. Messdaten, die die Position (z.B. Winkel) der Auslegerelemente, insbesondere deren relative Position bzw. deren Position relativ zum Auslegerträger (insbesondere jeweils auch relative Winkel), charakterisieren bzw. anzeigen. Hierzu können insbesondere Winkelsensoren vorgesehen sein, oder Sensoren, die die Auslenkung der Hydraulikzylinder bestimmen. Im Zusammenhang mit den Figuren 1, 2 und 3 wird insbesondere auf Kräftedaten und Positionsdaten und entsprechende Sensoren eingegangen. Dies sind bevorzugte Beispiele für Zustandsdaten bzw. Sensoren, im Allgemeinen können zusätzlich bzw. alternativ auch Zustandsdaten von anderen Sensoren erfasst werden (im Einzelnen nicht dargestellt), um beispielsweise Druckdaten, Momentdaten, Drehmomentdaten, Geschwindigkeitsdaten, Beschleunigungsdaten und/oder Spannungsdaten zu erfassen (die, wie angemerkt, im Prinzip auch als Kräfte- und/oder Positionsdaten aufgefasst werden können).

Da die geometrischen Verhältnisse der Auslegerelemente und deren Gewichte bzw. Massen bekannt sind, kann aus den Kräfte- und Positionsdaten das Gewicht bzw. die Masse einer aufgenommenen Last berechnet bzw. geschätzt werden. Dazu wird eine sogenannte Wiegefunktion verwendet, deren Implementierung dem Fachmann an sich bekannt ist. Der Zeitpunkt oder Zeitraum, an bzw. in dem die Kräfte- und Positionsdaten erfasst werden, basierend auf denen die aufgenommene Last berechnet wird, wird als Wiegezeitpunkt bzw. Wiegezeitraum bezeichnet.

Figur 2 zeigt beispielhafte Sensoren zur Erfassung von Kräfte- und Positionsdaten und ein beispielhaftes elektro-hydraulisches System zur Ansteuerung von Aktuatoren.

Rechts in der Figur 2 ist wieder der mehrere Auslegerelemente (Hubarm 2, Schaufel 4) aufweisende Ausleger zur Aufnahme einer Last entsprechend Figur 1 dargestellt. Zusätzlich sind Positionssensoren 20, 21 (hier Winkelsensoren) eingezeichnet. Dies sind beispielsweise ein erster Positionssensor 20, der einen Winkel zwischen Auslegerträger 5 und Hubarm 2 misst, und ein zweiter Positionssensor 21, der einen Winkel zwischen Hubarm 2 und Schaufel 4 misst. Messwerte werden zur Steuerung 28 und/oder zu einer Steuerung der Wiegefunktion (Wiegefunktion-Steuerung 29) übertragen, z.B. über einen Bus wie dem CAN-Bus.

Links in der in der Figur 2 sind die Hydraulikzylinder 12, 14 der beiden Aktuatoren 8, 10 dargestellt. Für den ersten Hydraulikzylinder 12 ist einer Paar von ersten Drucksensoren 22 vorgesehen und den zweiten Hydraulikzylinder 14 ist einer Paar von zweiten Drucksensoren 24 vorgesehen. Jedes Paar von Drucksensoren misst die Drücke auf beiden Seiten eines Kolbens des jeweiligen Hydraulikzylinders, so dass eine Druckdifferenz bestimmt werden kann, die eine Aussage über die vom Hydraulikzylinder aufgebrachte Kraft ermöglicht. Die von den Drucksensoren gemessenen Drücke bzw. die Druckdifferenzen stellen also Kraftdaten dar.

Der Fluss von Hydraulikflüssigkeit zu und von den Hydraulikzylindern 12, 14 wird mittels Wegeventilen 32, 34 gesteuert bzw. geregelt, die elektro-hydraulisch betätigt werden. Dazu können PWM-gesteuerte Druckreduzierungsventile 36, 37 (PWM: Puls-Weiten-Modulation) vorgesehen sein, über die ein hydraulisch aufgebrachter Betätigungsdruck der Wegeventile gesteuert wird.

In Figur 2 ist außerdem ein Joystick 40 dargestellt, der ein Bediensignal (insbesondere eine Auslenkung des Joysticks) erfasst und zur Steuerung 28 übermittelt. Die Steuerung 28 wertet das Bediensignal aus, um daraus entsprechende Ansteuersignale für die PWM-gesteuerten Druckreduzierungsventile 36, 37 zu bestimmen. D.h. die Steuerung der Bewegungen des Auslegers ausgehend vom Bediensignal erfolgt über die Steuerung 28.

Das Bediensignal kann von der Steuerung 28 insbesondere auch ausgewertet werden, um festzustellen, ob die Aktuatoren stillstehen oder sich bewegen. Alternativ oder zusätzlich kann die Steuerung 28 oder die Wiegefunktion-Steuerung 29 die Positionsdaten auswerten, um den Stillstand eines Aktuators zu erkennen. Wenn ein Aktuator stillsteht, steuert die Steuerung 28 das entsprechende Wegeventil automatisch an, um die Minimalbewegung dieses Aktuators zu erzeugen. Dabei wird das Bediensignal übersteuert bzw. überlagert. Die Steuerung 28 kann dann, d.h. während der Minimalbewegung, die Wiegefunktion, die durch die Wiegefunktion-Steuerung 29 implementiert wird, aufrufen.

Die Wiegefunktion-Steuerung 29 dient dazu, die Wiegefunktion zu implementieren, die also insbesondere die Kräfte- und Positionsdaten erfasst und darauf basieren eine Gewichtsschätzung durchführt. Selbstverständlich können die Steuerung 28 und die Wiegefunktion-Steuerung 29 in einem einzelnen Steuergerät implementiert sein.

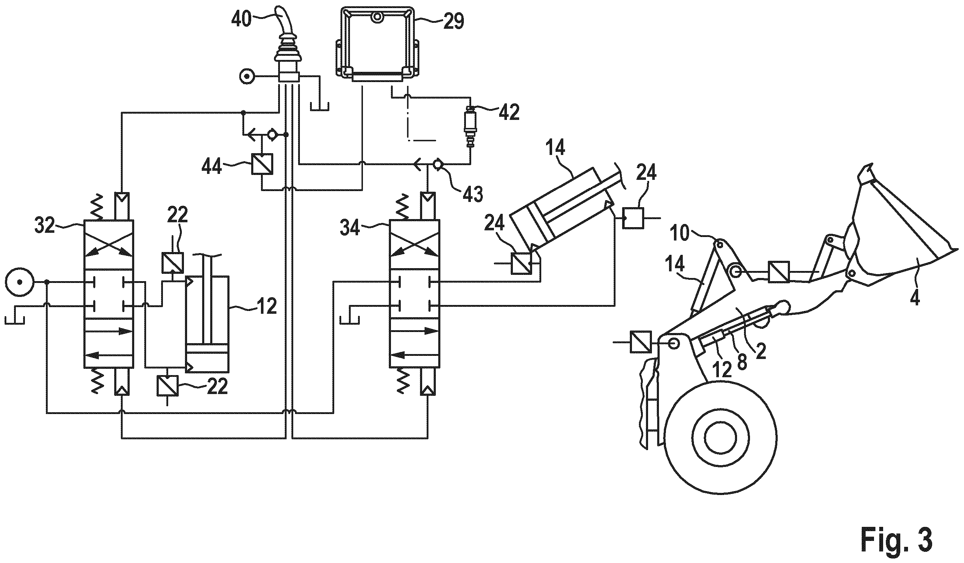

Figur 3 zeigt beispielhafte Sensoren zur Erfassung von Kräfte- und Positionsdaten und ein beispielhaftes hydraulisches System zur Ansteuerung von Aktuatoren. In großen Teilen entspricht diese Ausführung der Ausführung der Figur 2, so dass lediglich auf Unterschiede eingegangen wird.

Der Unterschied zur Figur 2 liegt darin, dass hier der Fluss der Hydraulikflüssigkeit direkt vom Joystick 40 gesteuert wird und keine entsprechende Steuerung durch ein Steuergerät vorgesehen ist. Durch die Auslenkung des Joysticks 40 kann der Fluss einer Steuerungs-Hydraulikflüssigkeit über Steuerleitungen zu und von hydraulischen Betätigungselementen der hydraulisch betätigten Wegeventile 32, 34 gesteuert werden. Die Auslenkung des Joysticks bzw. der entsprechende Fluss der Steuerungs-Hydraulikflüssigkeit kann als Bediensignal angesehen werden. Um dennoch das erfindungsgemäße Verfahren verwirklichen zu können, ist die Wiegefunktions-Steuerung 29 mit einem PWM-gesteuerten Druckreduzierungsventil 42 verbunden, über das die Wegeventile betätigt werden können. Ein mit der Wiegefunktion-Steuerung 29 verbundener Drucksensor 44 ist vorgesehen, um das Bediensignal zu erfassen.

Es ist ein Wechselventil 43 vorgesehen, mit dem sich, bei entsprechender Ansteuerung des PWM-gesteuerten Druckreduzierungsventils 42, das Bediensignal vom Joystick übersteuert bzw. überlagert werden kann, so dass das Wegeventil 34 entsprechend dem Drucksignal, das über das PWM-gesteuerten Druckreduzierungsventil 42 bereitgestellt wird, betätigt wird. In der gezeigten beispielhaften Anordnung führt dies zu einem Auskippen (Bewegung im Uhrzeigersinn) der Schaufel. Allgemeiner können analog zur gezeigten Anordnung des PWM-gesteuerten Druckreduzierungsventils 42 und des Wechselventils 43 selbstverständlich auch die Bediensignale, die sich auf andere oder zusätzliche Betätigungselemente der Wegeventile 32, 34 beziehen, übersteuert werden. Das PWM-gesteuerten Druckreduzierungsventil 42 und das Wechselventil 43 können zusammen als Übersteuerungseinrichtung angesehen werden. Das PWM-Signal stellt ein Übersteuerungssignal dar.

Im Fall der Figur 3 wird entsprechend durch die Wiegefunktion-Steuerung 29 der Stillstand eines Aktuators (hier insbesondere des zweiten Aktuators 10) erkannt und über das PWM-gesteuerte Druckreduzierungsventil 42 das entsprechende Wegeventil betätigt, um die Minimalbewegung zu erzeugen. Die Ausführung der Figur 3 ist bei hydraulisch gesteuerten Systemen zur Ansteuerung von Aktuatoren vorteilhaft, da diese um die Wiegefunktion-Steuerung, das PWM-gesteuerten Druckreduzierungsventil 42, und das Wechselventil 43 (und den Drucksensor 44) ergänzt werden können, um die Erfindung zu implementieren.

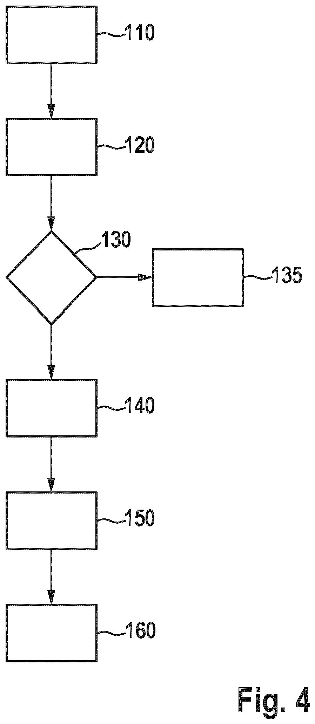

Figur 4 zeigt ein Ablaufdiagramm gemäß einer bevorzugten Ausführungsform der Erfindung. Dabei wird im optionalen Schritt 110 zunächst eine Wiegeanfrage empfangen, d.h. eine Anfrage, das Gewicht einer aufgenommenen Last zu bestimmen. Eine solche Anfrage kann z.B. von einer durch eine Steuerung der Arbeitsmaschine bzw. im Steuergerät der Arbeitsmaschine ausgeführte Anwendung erfolgen, wobei auch möglich ist, dass diese Anwendung die Anfrage in Reaktion auf eine Benutzerinteraktion, z.B. Betätigen eines Bedienelements durch einen Bediener der Arbeitsmaschine sendet.

Im bevorzugten Schritt 120 werden Positionsdaten erfasst. Es werden also die Messwerte der entsprechenden Sensoren, d.h. Positionssensoren insbesondere Winkelsensoren, erfasst bzw. abgefragt, die die Position bzw. Auslenkung der Aktuatoren bzw. die relativen Positionen (insbesondere Winkel) der Auslegerelemente zueinander und/oder zum Auslegerträger anzeigen. Die Positionsdaten werden für wenigstens zwei verschiedene Zeitpunkte erfasst.

In Schritt 130 wird geprüft, ob wenigstens einer der Aktuatoren stillsteht (und welcher Aktuator stillsteht). Diese Prüfung kann anhand der in Schritt 120 erfassten Positionsdaten erfolgen, wobei geprüft wird, ob sich die Positionsdaten zwischen den Zeitpunkten, für die sie erfasst wurden, so ändern, wie es bei einer Bewegung der Aktuatoren erwartet wird. Wenn dies nicht der Fall ist, wird davon ausgegangen, dass wenigstens ein Aktuator stillsteht und anhand der Positionsdaten auf den wenigstens einen stillstehenden Aktuator geschlossen. Im einfachsten Fall steht ein Positionsdatum, z.B. ein Winkel, in direktem Zusammenhang mit der Bewegung eines Aktuators. Alternativ oder zusätzlich kann das Signal oder können die Signale wenigstens einer Bedienkomponente oder wenigstens eines Bedienelements ausgewertet werden, um den Stillstand des wenigstens einen Aktuators zu erkennen. Jedem Aktuator ist dabei ein Signal zugeordnet, das diesen Aktuator steuert, so dass am Signal erkannt werden kann, ob der Aktuator bewegt wird (vorausgesetzt, die Steuerung bzw. Regelung des Aktuators ist hinreichend genau). Wenn kein Aktuator stillsteht, wird bevorzugt in Schritt 135 die Wiegefunktion aufgerufen.

Wenn wenigstens ein Aktuator stillsteht, wird der wenigstens eine stillstehende Aktuator in Schritt 140 so angesteuert, dass eine als Minimalbewegung bezeichnete Bewegung des Aktuators erzeugt wird bzw. so, dass mit der Minimalbewegung begonnen wird. Der wenigstens eine stillstehende Aktuator wird dabei so angesteuert, dass eine Geschwindigkeit der Minimalbewegung kleiner als eine vorgegebene Maximalgeschwindigkeit ist und vorzugsweise größer als eine Minimalgeschwindigkeit ist. Die Geschwindigkeit der Minimalbewegung kann veränderlich sein. Die Ansteuerung, um die Minimalbewegung zu erzeugen erfolgt automatisch, insbesondere ohne eine entsprechende manuelle Eingabe des Bedieners der Arbeitsmaschine. Ein Bediensignal, das vom Bediener über ein Bedienelement eingegeben wird, wird dabei übersteuert bzw. überlagert.

In Schritt 150 wird, während sich der wenigstens eine Aktuator entsprechend der Minimalbewegung bewegt, die Wiegefunktion aufgerufen bzw. ausgeführt, d.h. die Wiegefunktion wird zu einem Wiegezeitpunkt oder Wiegezeitraum aufgerufen, der so vorgegeben wird, dass er innerhalb eines Minimalbewegungs-Zeitabschnitts liegt, während dessen sich der wenigstens eine Aktuator entsprechend der Minimalbewegung bewegt. Der Minimalbewegungs-Zeitabschnitt ist der Zeitabschnitt, der sich vom Beginn der Minimalbewegung bis zum Beenden der Minimalbewegung erstreckt. Das durch die Wiegefunktion bestimmte Gewicht der aufgenommenen Last wird gegebenenfalls an die Anwendung, die in Schritt 110 die Wiegeanfrage gesendet hat, übermittelt.

In Schritt 160 wird die Minimalbewegung beendet, d.h. der Minimalbewegungs-Zeitabschnitt beendet. Dazu kann die zeitliche Länge des Minimalbewegungs-Zeitabschnitts vorbestimmt sein, wobei die zeitliche Länge so vorbestimmt ist, dass sie hinreichend lange ist, um die für die Wiegefunktion benötigten Kräfte- und Positionsdaten zu erfassen. Alternativ kann vorgesehen sein, dass die Minimalbewegung beendet wird, wenn eine entsprechende Meldung der Wiegefunktion vorliegt. Die Meldung kann beispielsweise ein Gewichts-Messergebnis der Wiegefunktion sein oder eine Meldung, die anzeigt, dass die Erfassung der benötigten Kräfte- und Positionsdaten beendet ist.

## Patentansprüche

1. Verfahren zum Aufrufen einer Wiegefunktion einer Arbeitsmaschine (1), die zur Aufnahme von Lasten einen Ausleger mit einem oder mehreren Auslegerelementen (2, 4) aufweist, die durch einen oder mehrere unabhängig voneinander wirkende Aktuatoren (8, 10) bewegbar sind, wobei Sensoren (20, 21, 22, 24) vorgesehen sind, die eingerichtet sind, Zustandsdaten des Auslegers zu erfassen, und wobei die Wiegefunktion dazu eingerichtet ist, erfasste Zustandsdaten auszuwerten, um ein Gewicht einer von dem Ausleger aufgenommenen Last zu bestimmen; **dadurch gekennzeichnet**, durch eine Steuerung (18, 28) oder eine Wiegefunktion-Steuerung (29) der Arbeitsmaschine:
Prüfen (130), ob wenigstens ein Aktuator des einen oder der mehreren Aktuatoren stillsteht;
wenn wenigstens ein Aktuator stillsteht, Starten (140) einer Minimalbewegung des wenigstens einen Aktuators, der stillsteht, wobei der wenigstens eine Aktuator angesteuert wird, um diesen in die Minimalbewegung zu versetzen, wobei die Minimalbewegung so gesteuert wird, dass eine Geschwindigkeit der Minimalbewegung kleiner als eine vorbestimmte Maximalgeschwindigkeit ist;
Aufrufen (150) der Wiegefunktion, so dass wenigstens ein Wiegezeitpunkt innerhalb eines Zeitabschnitts liegt, in dem der wenigstens eine Aktuator entsprechend der Minimalbewegung bewegt wird; und
Beenden (160) der Minimalbewegung.

2. Verfahren nach Anspruch 1, wobei die Geschwindigkeit der Minimalbewegung größer als eine vorbestimmte Minimalgeschwindigkeit ist.

3. Verfahren nach einem der vorstehenden Ansprüche, wobei Positionsdaten erfasst werden (120) und das Prüfen (130), ob wenigstens ein Aktuator stillsteht, basierend auf den Positionsdaten erfolgt, und/oder wobei das Prüfen (130), ob wenigstens ein Aktuator stillsteht, basierend auf einem Bediensignal erfolgt.

4. Verfahren nach einem der vorstehenden Ansprüche, wobei die Zustandsdaten Kräftedaten und Positionsdaten umfassen, wobei die Kräftedaten eine oder mehrere von den Aktuatoren aufgebrachte Kräfte anzeigen und die Positionsdaten eine oder mehrere Positionen des einen oder der mehreren Auslegerelemente anzeigen.

5. Verfahren nach Anspruch 3 oder 4, wobei die Sensoren einen oder mehrere Drucksensoren (22, 24) umfassen, um die Kräftedaten zu erfassen, und einen oder mehrere Positionssensoren (20, 21), insbesondere einen oder mehrere Winkelsensoren, umfassen, um die Positionsdaten zu erfassen.

6. Verfahren nach einem der vorstehenden Ansprüche, wobei das Beenden (160) der Minimalbewegung in Reaktion auf eine Meldung der Wiegefunktion oder in Reaktion auf ein Vorliegen eines Wiegeergebnisses der Wiegefunktion erfolgt.

7. Verfahren nach einem der vorstehenden Ansprüche, wobei eine Wiegeanfrage empfangen wird (110); und in Reaktion auf die Wiegeanfrage umfassend: Durchführen des Prüfens (130), ob wenigstens ein Aktuator stillsteht, und, wenn wenigstens ein Aktuator stillsteht, der weiteren Schritte (140, 150, 160).

8. Verfahren nach einem der vorstehenden Ansprüche, wobei ein Bediensignal bzw. eine entsprechende Bewegung durch die Minimalbewegung übersteuert bzw. überlagert wird.

9. Verfahren nach Anspruch 8, umfassend Erzeugen eines Übersteuerungssignals und Ansteuern einer Übersteuerungseinrichtung, die mit einem Betätigungselement eines Aktuators verbunden ist, um das Bediensignal zu übersteuern.

10. Arbeitsmaschine (1), die zur Aufnahme von Lasten einen Ausleger mit einem oder mehreren Auslegerelementen (2, 4) aufweist, die durch einen oder mehrere unabhängig voneinander wirkende Aktuatoren (8, 10) bewegbar sind, wobei Sensoren (20, 21, 22, 24) vorgesehen sind, die eingerichtet sind, Zustandsdaten des Auslegers zu erfassen, wobei eine Wiegefunktion-Steuerung (29) vorgesehen ist, die eine Wiegefunktion implementiert, die dazu eingerichtet ist, erfasste Zustandsdaten auszuwerten, um ein Gewicht einer von dem Ausleger aufgenommenen Last zu bestimmen; aufweisend eine Recheneinheit (18, 28, 29) die dazu eingerichtet ist ein Verfahren nach einem der vorstehenden Ansprüche durchzuführen.

11. Arbeitsmaschine nach Anspruch 2. 10, wobei die Wiegefunktion-Steuerung und/oder die Recheneinheit dazu eingerichtet ist, ein Übersteuerungssignal, insbesondere ein PWM-Signal, zu erzeugen, mit dem ein Bediensignal eines Bedieners übersteuert wird.

12. Arbeitsmaschine nach Anspruch 11, wobei eine Übersteuerungseinrichtung, insbesondere mit einem Druckreduzierungsventil und einem Wechselventil, vorgesehen ist, die mit einem Betätigungselement eines Aktuators verbunden ist, um das Bediensignal zu übersteuern; wobei die Wiegefunktion-Steuerung und/oder die Recheneinheit mit der Übersteuerungseinrichtung verbunden sind, um diese mittels des Übersteuerungssignals anzusteuern.

13. Computerprogramm, umfassend Befehle, die bewirken, dass die Arbeitsmaschine des Anspruchs 10 die Verfahrensschritte nach Anspruch 1 ausführt.

14. Maschinenlesbares Speichermedium mit einem darauf gespeicherten Computerprogramm nach Anspruch 13.

## Claims

1. Method for calling a weighing function of a labouring machine (1) that, in order to receive loads, has a boom having one or more boom elements (2, 4) that can be moved by one or more actuators (8, 10) that act independently of one another, wherein there is provision for sensors (20, 21, 22, 24) designed to capture state data relating to the boom, and wherein the weighing function is designed to evaluate captured state data in order to determine a weight of a load received by the boom; **characterized in that** by a controller (18, 28) or a weighing function controller (29) of the labouring machine:
checking (130) whether at least one actuator of the one or more actuators is idle;
if at least one actuator is idle, starting (140) a minimum motion of the at least one actuator that is idle, the at least one actuator being driven to set it in the minimum motion, the minimum motion being controlled such that a speed of the minimum motion is less than a predetermined maximum speed;
calling (150) the weighing function, with the result that at least one weighing time is within a time period in which the at least one actuator is being moved in accordance with the minimum motion; and
terminating (160) the minimum motion.

2. Method according to Claim 1, wherein the speed of the minimum motion is greater than a predetermined minimum speed.

3. Method according to either of the preceding claims, wherein position data are captured (120) and the checking (130) of whether at least one actuator is idle is performed on the basis of the position data, and/or wherein the checking (130) of whether at least one actuator is idle is performed on the basis of an operator control signal.

4. Method according to one of the preceding claims, wherein the state data comprise force data and position data, the force data indicating one or more forces applied by the actuators, and the position data indicating one or more positions of the one or more boom elements.

5. Method according to Claim 3 or 4, wherein the sensors comprise one or more pressure sensors (22, 24) in order to capture the force data, and comprise one or more position sensors (20, 21), in particular one or more angle sensors, in order to capture the position data.

6. Method according to one of the preceding claims, wherein the terminating (160) of the minimum motion is performed in response to a report from the weighing function or in response to the availability of a weighing result from the weighing function.

7. Method according to one of the preceding claims, wherein a weighing request is received (110); and, in response to the weighing request, comprising: carrying out the checking (130) of whether at least one actuator is idle, and, if at least one actuator is idle, the further steps (140, 150, 160).

8. Method according to one of the preceding claims, wherein an operator control signal or an applicable motion is overridden or overlaid by the minimum motion.

9. Method according to Claim 8, comprising generating an override signal and driving an override device connected to an operating element of an actuator in order to override the operator control signal.

10. Labouring machine (1) that, in order to receive loads, has a boom having one or more boom elements (2, 4) that can be moved by one or more actuators (8, 10) that act independently of one another, wherein there is provision for sensors (20, 21, 22, 24) designed to capture state data relating to the boom, there being provision for a weighing function controller (29) that implements a weighing function designed to evaluate captured state data in order to determine a weight of a load received by the boom; comprising a computing unit (18, 28, 29) designed to carry out a method according to one of the preceding claims.

11. Labouring machine according to Claim 10, wherein the weighing function controller and/or the computing unit is designed to generate an override signal, in particular a PWM signal, that is used to override an operator control signal from an operator.

12. Labouring machine according to Claim 11, wherein there is provision for an override device, in particular having a pressure reduction valve and a shuttle valve, that is connected to an operating element of an actuator in order to override the operator control signal; the weighing function controller and/or the computing unit being connected to the override device in order to drive it by means of the override signal.

13. Computer program comprising commands that cause the labouring machine of Claim 10 to perform the method steps according to Claim 1.

14. Machine-readable storage medium with a computer program according to Claim 13 stored thereon.

## Revendications

1. Procédé pour invoquer une fonction de pesage d'une machine de travail (1), qui possède, pour la réception de charges, une flèche pourvue d'un ou de plusieurs éléments de flèche (2, 4) qui peuvent être déplacés par un ou plusieurs actionneurs (8, 10) agissant indépendamment les uns des autres, des capteurs (20, 21, 22, 24) étant prévus, lesquels sont conçus pour acquérir des données d'état de la flèche, et la fonction de pesage étant conçue pour interpréter les données d'état acquises afin de déterminer un poids d'une charge reçue par la flèche ; **caractérisé en ce que**, par une commande (18, 28) ou une commande de fonction de pesage (29) de la machine de travail :
vérifier (130) si au moins un actionneur de l'un ou des plusieurs actionneurs est à l'arrêt ;
lorsqu'au moins un actionneur est à l'arrêt, démarrer (140) un mouvement minimal de l'au moins un actionneur qui est à l'arrêt, l'au moins un actionneur étant commandé de manière à mettre celui-ci en le mouvement minimal, le mouvement minimal étant commandé de telle sorte qu'une vitesse du mouvement minimal soit inférieure à une vitesse maximale prédéterminée ;
invoquer (150) la fonction de pesage, de sorte qu'au moins un instant de pesage se trouve à l'intérieur d'un intervalle de temps dans lequel l'au moins un actionneur est déplacé conformément au mouvement minimal ; et terminer (160) le mouvement minimal.

2. Procédé selon la revendication 1, la vitesse du mouvement minimal étant supérieure à une vitesse minimale prédéterminée.

3. Procédé selon l'une des revendications précédentes, des données de position étant acquises (120) et la vérification (130) si au moins un actionneur est à l'arrêt étant effectuée sur la base des données de position, et/ou la vérification (130) si au moins un actionneur est à l'arrêt étant effectuée sur la base d'un signal d'opération.

4. Procédé selon l'une des revendications précédentes, les données d'état comprenant des données de force et des données de position, les données de force indiquant une ou plusieurs forces appliquées par les actionneurs et les données de position indiquant une ou plusieurs positions de l'un ou des plusieurs éléments de flèche.

5. Procédé selon la revendication 3 ou 4, les capteurs comprenant un ou plusieurs capteurs de pression (22, 24) pour acquérir les données de force, et un ou plusieurs capteurs de position (20, 21), en particulier un ou plusieurs capteurs d'angle, pour acquérir les données de position.

6. Procédé selon l'une des revendications précédentes, la terminaison (160) du mouvement minimal étant effectuée en réaction à un message de la fonction de pesage ou en réaction à la présence d'un résultat de pesage de la fonction de pesage.

7. Procédé selon l'une des revendications précédentes, une demande de pesage étant reçue (110) ; et comprenant, en réaction à la demande de pesage : l'exécution de la vérification (130) si au moins un actionneur est à l'arrêt et, si au moins un actionneur est à l'arrêt, des étapes supplémentaires (140, 150, 160).

8. Procédé selon l'une des revendications précédentes, un signal d'opération ou un mouvement correspondant étant surmodulé ou superposé par le mouvement minimal.

9. Procédé selon la revendication 8, comprenant la génération d'un signal de surmodulation et la commande d'un dispositif de surmodulation qui est connecté à un élément d'actionnement d'un actionneur pour surmoduler le signal d'opération.

10. Machine de travail (1), qui possède, pour la réception de charges, une flèche pourvue d'un ou de plusieurs éléments de flèche (2, 4) qui peuvent être déplacés par un ou plusieurs actionneurs (8, 10) agissant indépendamment les uns des autres, des capteurs (20, 21, 22, 24) étant présents, lesquels sont conçus pour acquérir des données d'état de la flèche, une commande de fonction de pesage (29) étant présente, laquelle met en œuvre une fonction de pesage qui est conçue pour interpréter les données d'état acquises afin de déterminer un poids d'une charge reçue par la flèche ; possédant une unité de calcul (18, 28, 29) qui est conçue pour mettre en œuvre un procédé selon l'une des revendications précédentes.

11. Machine de travail selon la revendication 10, la commande de la fonction de pesage et/ou l'unité de calcul étant conçue pour générer un signal de surmodulation, en particulier un signal PWM, avec lequel un signal d'opération d'un opérateur est surmodulé.

12. Machine de travail selon la revendication 11, un dispositif de surmodulation étant présent, qui comprend notamment une vanne réduction de pression et une vanne de commutation et qui est relié à un élément d'actionnement d'un actionneur pour surmoduler le signal de commande ; la commande de fonction de pesage et/ou l'unité de calcul étant reliée au dispositif de surmodulation afin de commander celle-ci au moyen du signal de surmodulation.

13. Programme informatique comprenant des instructions qui ont pour effet que la machine de travail selon la revendication 10 exécute les étapes du procédé selon la revendication 1.

14. Support de stockage lisible par machine sur lequel est enregistré un programme informatique selon la revendication 13.
